# EUROPEAN PATENT SPECIFICATION

(11) **EP 2 505 541 B1**
(45) Date of publication and mention of the grant of the patent: **30.11.2016**
(21) Application number: 11382091.4
(22) Date of filing: 31.03.2011
(51) Int. Cl.: F03D 1/00, B66C 23/20

(54) **Wind turbine**
Windturbine
Éolienne

(43) Date of publication of application: 03.10.2012
(73) Proprietor: ALSTOM Renewable Technologies, 38100 Grenoble (FR)
(72) Inventor: VALERO LAFUENTE, SEBASTIAN, 08005, Barcelona (ES)
(74) Representative: ZBM Patents - Zea, Barlocci & Markvardsen

(56) References cited:
- EP-A2- 1 677 007
- WO-A1-2007/107817
- WO-A1-2009/155934
- WO-A2-2010/031528
- NL-C2- 1 014 553

## Description

The present invention relates to a wind turbine, more particularly to a wind turbine nacelle comprising a crane.

### BACKGROUND ART

Modern wind turbines are commonly used to supply electricity into the electrical grid. Wind turbines generally comprise a rotor with a rotor hub and a plurality of blades. The rotor is set into rotation under the influence of the wind on the blades. The rotation of the rotor shaft drives the generator rotor either directly ("directly driven") or through the use of a gearbox.

Maintenance and service play a major role in wind turbine economics. Being able to handle large, heavy and/or awkward components that are provided inside the nacelle, the hub or the spinner, such as geared motors, brake callipers, electric cabinets, etc..., as well as tools, and lift and lower them to and from the tower base in a fast, safe, easy and economic manner is a must.

Several systems are known for lowering/hoisting wind turbine components from the nacelle or the hub. It is e.g. known to use a large crane to lift components from a ground level over the nacelle or hub and then lowering them down into the wind turbine. These systems, involving lifting components in an outdoor setting may encounter unexpected challenges, such as the possibility of strong winds. In offshore wind farms a special support vessel may be used providing accommodation for cranes, service personnel and/or supporting helicopter operations. This kind of use of large cranes is generally very expensive.

Therefore, wind turbines are often fitted with their own cranes to assist in carrying out maintenance work on some of their components, without the need for external resources.

Some wind turbines have -chain hoists or cable winches arranged (permanently or temporarily) inside the nacelle of the wind turbine.

In some cases, a separate temporary boom crane can be used. In many of these cases, at least a part of the roof of the nacelle or the hub has to be opened in order to temporarily install the crane. This kind of arrangement may therefore result in a more complicated and/or more expensive nacelle structure.

In other cases, it is known to hang a chain hoist from a trolley arranged in a cantilevered beam attached to a column bolted to the floor of the nacelle (also known as jib crane). In these cases however, the column bolted to the floor of the nacelle limits the movements and maintenance ergonomics inside the nacelle.

Document WO2010037392 shows a service crane for a wind turbine adapted to be mounted on a wind turbine during operation (maintenance or service operation) and to be dismounted when not being used. The attachment foundation of the service crane is mounted on the hub via the blade pitch bearing. This solution makes repair works inconvenient and complex as a blade has to be dismantled in order to use the blade pitch bearing as a mounting support for the crane. In addition, mounting and dismantling the crane may involve an important amount of time.

Document EP1291521 discloses a wind turbine comprising a nacelle in which an overhead frame acts as a bridge to which pulleys are attached and a ground base winch can lift and lower turbine parts housed by the nacelle. A mobile beam section can be attached to the overhead frame that may extend over the hub for maintenance of the hub and/or blades. The range of the hoist in this kind of solution however is limited and does not cover the whole nacelle area, so that there may be components that cannot be reached easily.

Document WO2010024510 describes a maintenance system for a wind turbine provided inside the nacelle. The maintenance system includes a trolley support unit, a trolley, a pulley, a winch unit and a door. The trolley support unit is arranged so as to be movable along the longitudinal direction of the nacelle. The trolley is arranged so as to be movable on the trolley support unit in a direction lateral to the longitudinal direction of the nacelle. The pulley is installed in the trolley so as to be rotatable and the winch is connected to the pulley through a wire. Thus such an arrangement allows horizontal movements in two perpendicular directions. It is however a complicated arrangement as the overhead structure comprises at least two parallel beams and a third beam being movable between the two parallel beams.

Document EP1859165 describes a wind turbine nacelle with an integral service crane for accessing turbine components. The service crane comprises a movable main crane beam having a track for guidance of a trolley, a first frame comprising a hinge, wherein the main crane beam is connected to the hinge, and a stationary beam is connected with a distal end of the main crane beam such that the main crane beam can laterally move along the stationary beam. Such an arrangement is rather complicated as it comprises a beam moving in a substantially lateral direction. Furthermore, this arrangement is not able to cover the whole nacelle area.

Document WO 2010031528 describes a hoisting device for a wind turbine being movable on a support track in a machine housing of the wind turbine.

Thus, it is still desirable to provide a solution which facilitates the repair and replacement of components housed inside of a wind turbine.

### SUMMARY OF THE INVENTION

It is an object of the present invention to provide a crane for use in wind turbines that overcomes at least some of above mentioned drawbacks.

In a first aspect, the invention provides a wind turbine nacelle comprising a slewing crane, wherein the crane comprises a base structure attached at a roof of the nacelle, a beam rotatably mounted about said base structure, and a hoist movably arranged on said beam.

According to this aspect, the slewing crane provided inside the nacelle is a rather compact arrangement that enhances maintenance ergonomics inside the nacelle. In addition, the rotation of the beam of the slewing crane with the moveable hoist can cover a 360° swept area, thus being able reach components in a circular area around the crane.

The nacelle roof should be understood as the structure forming the covering on the upper side of the nacelle. The roof structure may comprise e.g. a truss structure, and a metal casing covering this lattice structure and is not limited to a metal casing per se.

In some embodiments the base structure may comprise a bearing and the beam may be rotatably mounted about the bearing. In others, the base structure may comprise guide members and the beam may comprise rolling elements such that the beam is rotatable about said guide members.

In some embodiments, the beam may extend substantially radially from the base structure in such a manner that it does not traverse the rotational axis of the crane. An aspect of these configurations is that the electrical cables coming from and going to the generator can be suspended from the roof of the nacelle and extend through the hollow centre of the base structure towards the inside of the wind turbine tower. Moreover, the electric cables and/or hydraulic pipes of the crane can pass through the hollow centre of the base structure, which may simplify the electric and/or hydraulic connections.

In other embodiments, the beam may be attached to the bottom of said base structure and may traverse the rotational axis of the crane. In these embodiments, the hoist can reach the centre of the base structure, thus being able to pick up components located right underneath the rotational axis of the crane.

In some embodiments, the beam may comprise an annular sleeve for mounting the beam on the base structure.

In some embodiments, the beam may be telescopic. The beam may thus be extendable to suitable lengths depending on which component is handled, and where it needs to be picked up and delivered.

In some embodiments, a forward extending beam may be mounted in a front portion of the nacelle in such a way that the beam of the crane can be aligned with said forward extending beam. The hoist that can move along the beam can thus move further forward along this extension. In yet further embodiments, a rearward extending beam may be mounted in a rear portion of the nacelle in such a way that the beam of the crane can be aligned with said rearward extending beam. Some embodiments may have both, a rearward extending beam and a forward extending beam.

In some embodiments, the forward extending beam and/or the rearward extending beam may be fixedly mounted in the nacelle. In others, they may be removably mounted in the nacelle.

In some embodiments, the wind turbine nacelle may further comprise a rear opening. Such an opening (possibly provided with a door or a hatch) may be used to e.g. remove or introduce components and lowering or raising them rear of the wind turbine tower.

Another aspect of the invention provides a wind turbine comprising a hub carrying at least one blade and a nacelle substantially as hereinbefore described. The hub may be rotatably mounted on a frame and the nacelle may be rotatably mounted on a wind turbine tower.

In some embodiments, the frame may extend forward into the hub, may comprise a manhole arranged in its upper side and may be dimensioned such that an average-size adult human can move around through it at least up to the manhole.

All throughout the present description and claims, the term *manhole* should be interpreted as an opening through which a person can gain access into e.g. parts of machinery e.g. for cleaning or repairing.

In some embodiments, a rotational axis of the base structure of the slewing crane may substantially coincide with a wind turbine tower axis.

In some embodiments, the wind turbine nacelle may further comprise an opening in the floor arranged on top of a wind turbine tower. Components may thus be raised / lowered through an elevator path or a lift arranged inside the wind turbine tower.

In some embodiments, the wind turbine may further comprise a transport system arranged in a lower portion of the frame extending forward into the hub. Components housed inside the hub and/or the spinner can be transported across the frame extending forward into the hub, and can be lifted or lowered by the slewing crane as hereinbefore described.

An aspect of embodiments of the present invention is that the lifting and/or lowering operations may be accomplished without full exposure of service personnel e.g. on top of the nacelle, which may increase the safety of maintenance personnel.

Additional objects, advantages and features of embodiments of the invention will become apparent to those skilled in the art upon examination of the description, or may be learned by practice of the invention.

### BRIEF DESCRIPTION OF THE DRAWINGS

Particular embodiments of the present invention will be described in the following by way of non-limiting examples, with reference to the appended drawings, in which:
Figure 1 illustrates a cross-sectional view of a wind turbine according to an embodiment of the present invention;
Figure 2 illustrates a perspective of the wind turbine nacelle of figure 1 and the frame extending forward into the hub;
Figure 3a and 3b illustrate a cross-section of a wind turbine according to another embodiment of the present invention;
Figure 4 illustrates a cross-section of a wind turbine according to a further embodiment of the present invention;
Figure 5 illustrates a cross-section of a wind turbine according to an embodiment of the present invention;
Figure 6 illustrates a perspective of the wind turbine nacelle and the frame extending forward into the hub according to an embodiment of the invention.
Figures 7a-7d schematically illustrate cross-sections of different embodiments of the attachment of the slewing crane at the nacelle roof.

### DETAILED DESCRIPTION OF EMBODIMENTS OF THE INVENTION

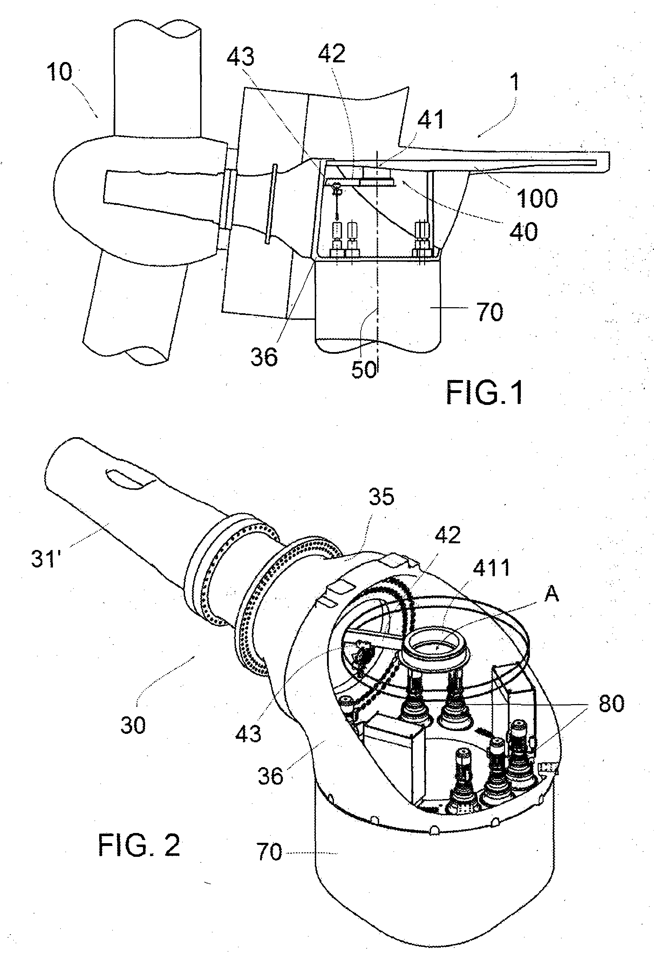

Figure 1 illustrates a cross-sectional view of a wind turbine according to an embodiment of the present invention. The wind turbine nacelle 1 comprises a rear frame 36. The wind turbine nacelle 1 comprises a slewing crane 40 substantially arranged inside the nacelle. The slewing crane 40 comprises a base structure, schematically indicated with reference sign 41, attached at an overhead structure 100 of the roof of the nacelle. The slewing crane 40 comprises a beam 42 rotatably mounted about the base structure 41 and a hoist 43 movably arranged on the beam 42.

Hoist 43 may be e.g. a winch, or a chain, wire or rope hoist. Beam 42 can rotate about rotational axis 50 and the hoist can move along this beam. This combination enables the slewing crane to pick up components practically anywhere in the nacelle.

The slewing crane 40 shown in figure 1 is shown to be operating on one of the motors of the yaw system, arranged between the nacelle rear frame 36 and the wind turbine tower 70. But other components, such as lubrication pumps, components of hydraulic and/or electrical systems housed inside the nacelle may thus also be easily picked-up by the slewing crane.

The rotation of the beam 42 about the rotational axis may be established with any suitable actuation mechanism. In one embodiment, an electric motor may drive a pinion engaging with an annular gear to establish the rotation of the beam about base structure. In other embodiments, hydraulic actuators may act directly on the beam.

Figure 2 shows a perspective view of the wind turbine nacelle of figure 1. The base structure (reference 41 of figure 1) has a substantially hollow center, schematically indicated by arrow A. The beam 42 comprises an annular sleeve 411 at its proximal end. The sleeve is rotatably mounted about base structure 41 and beam 42 extends radially from said sleeve 411 (and away from the base structure 41) in such a manner that it does not traverse the rotational axis of the crane (reference 50 in figure 1).

The passage created by the hollow center of the base structure may be used for arranging electrical cables of the generator. These cables may be suspended from the roof of the nacelle and may pass through the hollow centre of the base structure towards the inside of the wind turbine tower. Moreover, the arrangement of electrical and hydraulic supply lines of the crane, supply lines of other hydraulic systems and supply lines of e.g. cooling systems may pass through the hollow center A towards and from the nacelle.

In this example, the rotational axis of the crane substantially coincides with the yaw axis of the nacelle. The arrangement of electrical cables, hydraulics etc. through the center A is thus substantially not affected by a yaw movement of the nacelle i.e. cables will not get tangled up.

The beam 42 may have any suitable cross-section, such as e.g. an I-beam or a T-beam. The crane further comprises a hoisting device 43 which can move along the beam 42. To this end, the hoisting device may comprise e.g. wheels and a suitable drive.

Figure 2 further illustrates the frame 30 extending forward into the hub (the hub 10 shown in figure 1). The frame 30 may comprise a front frame 31', a middle frame 35 and a rear frame 36 which are connected to each other. One aspect of the division in three separate frame portions, shown in figure 2, is that it may simplify manufacture and transport of the frame parts. It should be noted however that in other embodiments, the frame may comprise various sections, or it may be a single integral piece. The frame and/or frame portions may be made e.g. of cast iron or steel.

In some embodiments, the front frame 31' may have a tapered shape. In others, it may be cylindrically shaped.

Further, figure 2 illustrates the rear frame 36 rotatably mounted on the wind turbine tower 70 and some components 80 housed inside the nacelle. Such components 80 may be arranged in a substantially circular configuration on top of the wind turbine tower 70. Thus, the rotation of the beam 42 of the slewing crane allows for these components to be reached easily.

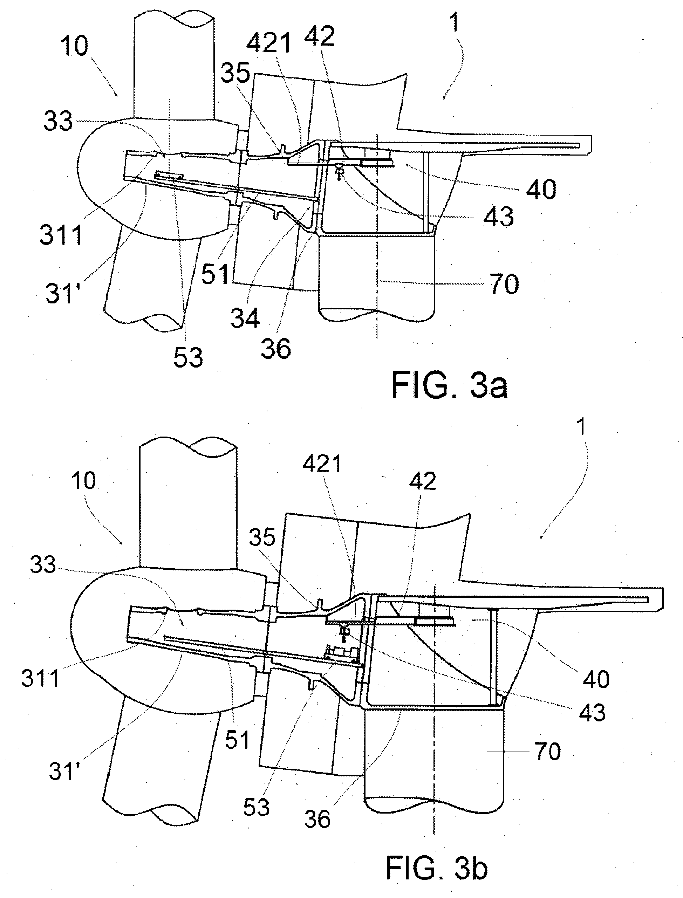

Figures 3a and 3b show a cross-section of the frame extending forward into the hub 10. The frame may comprise a front frame 31', a middle frame 35 and a rear frame 36 which are connected to each other. Figures 3a and 3b show two sequences of the same embodiment of the present invention wherein a forward extending beam 421 is mounted in a front portion of the nacelle (at a proximal end 34 of the middle frame 35). Said forward extending beam 421 can be either fixedly or removably mounted in the middle frame 35. The beam 42 of the slewing crane 40 may be aligned such that the hoist 43 can move along both, the beam 42 of the crane and the forward extending beam 421. The forward extending beam 421 may thus function as an extension of the beam 42 of the crane. With this arrangement, components can be transported over a large distance in spite of having a relatively limited crane beam length. Alternatively, the beam 42 of the slewing crane 40 may be telescopic. The length of beam 42 may thus be adjusted during operation: e.g. when swaying (rotating) the beam may be shorter and when positioned in a forward direction, the beam may be extended to reach into forward frame portions.

The front frame 31' and the middle frame 35 may comprise a transport system extending from a proximal end 34 of the middle frame 35 to at least a manhole 33 arranged in an upper side of the front frame 31'. In some embodiments, the transport system may extend up to a distal end of the frame. The front frame 31' may comprise reinforcement 311 along the periphery of the manhole 33.

The transport system may comprise e.g. a pair of rails 51, a (flatbed) trolley 53 and driving means (not shown). The rails 51 may be arranged on a lower portion of the front frame 31' and the middle frame 35. The trolley 53 can be driven on the pair of rails 51.

The driving means of the transport system may be e.g. a hoist or pulley hoist, a winch or the like, either manually or electrically operable and they can be mounted either at the proximal end of the frame or at its distal end. In other embodiments, a different transport system may be employed like for instance a mono rail system.

In some embodiments, the rails can be removably arranged, in others a portion of the rails can be removably arranged and another portion can be fixedly arranged. In an example, the portion of the rails provided in the front frame 31' of e.g. figures 3a or 3b can be fixedly arranged whereas the rails provided in the middle frame 35 can be removably arranged. In such case, at least some components of the drive system may also be removably mounted. In these cases, it will not be necessary to carry out mounting tasks related to the pair of rails in the front frame 31' wherein the working available space is relatively reduced. On the other hand, in the middle frame 35, wherein the working space is bigger, it might be helpful to have the rails and the driving means mounted in a removably manner so as to increase the normally available working space inside the middle frame 35.

Figure 3a shows a possible initial position for the trolley 53 underneath the manhole 33, at this position the trolley 53 is ready to receive a component housed inside the hub 10. Such a component, e.g. a pitch motor, may be lowered using a hoist or pulley arrangement provided inside the hub. For example, a three bladed wind turbine may be stopped for maintenance in a "Y" configuration. This "Y" configuration favors the hanging of hoisting means in a structurally robust component (the hub) for manipulating components to and from the hub through the manhole 33 since a relatively large space is thus available.

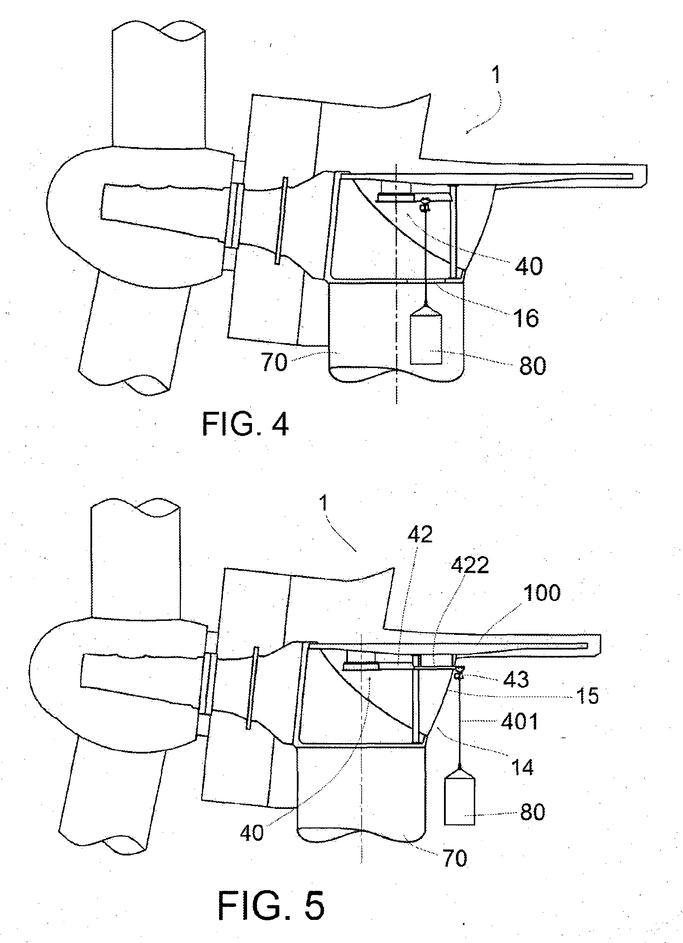

Figure 3b shows a possible end position for the trolley 53 at a proximal end of the frame. In figure 3b the hoist 43 has been moved along the crane beam 42 and the forward extending beam 421 up to a position right on top of the trolley 53 of the transport system (now at a proximal end of the frame). Thus, components housed e.g. inside the hub 10 being transported by the trolley 53 can be easily picked-up by the slewing crane 40 and (as shown in figures 4 and 5) lowered to the ground. If the rails 51 of the transport system extend up to a distal end of the frame extending forward into the hub, a similar operation can be carried out for a component housed inside the spinner of the wind turbine.

In addition, the embodiments described in figures 3a and 3b facilitate evacuation of an injured person working inside the hub and/or the spinner using e.g. a stretcher that can be manoeuvred through the manhole 33 and transported on top of the trolley 53 of the transport system.

In some embodiments, the hub may comprise a substantially tubular inner stiffening structure (not shown) arranged between a front end and a rear end (not shown) of the hub and coaxially arranged around the front portion of the frame. Such inner stiffening structure may comprise at least one opening of at least substantially the same dimensions as the manhole provided in the upper side of the front portion of the frame.

In some embodiments the hub may comprise at least one door or hatch arranged on an external wall of the hub in the space between two blades. Such an openable door or hatch can be used as an alternative escape route in case of an emergency inside the wind turbine.

Figure 4 shows another embodiment of the wind turbine nacelle 1 comprising the slewing crane 40 of figure 1, wherein the nacelle 1 comprises an opening in the floor 16 arranged on top of the wind turbine tower 70. This way, components 80 can be lifted/lowered through the interior of the wind turbine tower 70 up to and from e.g. an inner platform at the base of the wind turbine tower 70.

Figure 5 shows an embodiment of the present invention wherein a rearward extending beam 422 is mounted in a rear portion 14 of the nacelle. Said rearward extending beam 422 can be either fixedly or removably mounted and may function as an extension of the crane beam. The crane beam may be aligned with the rearward extending beam 422 in such a manner that the hoist 43 can be moved along both, the beam 42 and the rearward extending beam 422.

The rearward extending beam 422 may be suspended from the overhead structure 100 of the roof of the nacelle 1 to which the slewing crane may also be attached. In addition the nacelle 1 may comprise a rear opening 15 with a door or hatch. Thus, a component 80 can be taken out of the nacelle 1 through that opening 15 arranged at the rear portion 14 of the nacelle by means of the slewing crane and lifted/lowered to the ground provided the line/rope/chain/wire mechanism 401 of the crane has a length enough to reach the wind turbine tower base. In a similar fashion, in the wind turbine according to this embodiment, the slewing crane may be used for lowering an injured person rear of the wind turbine.

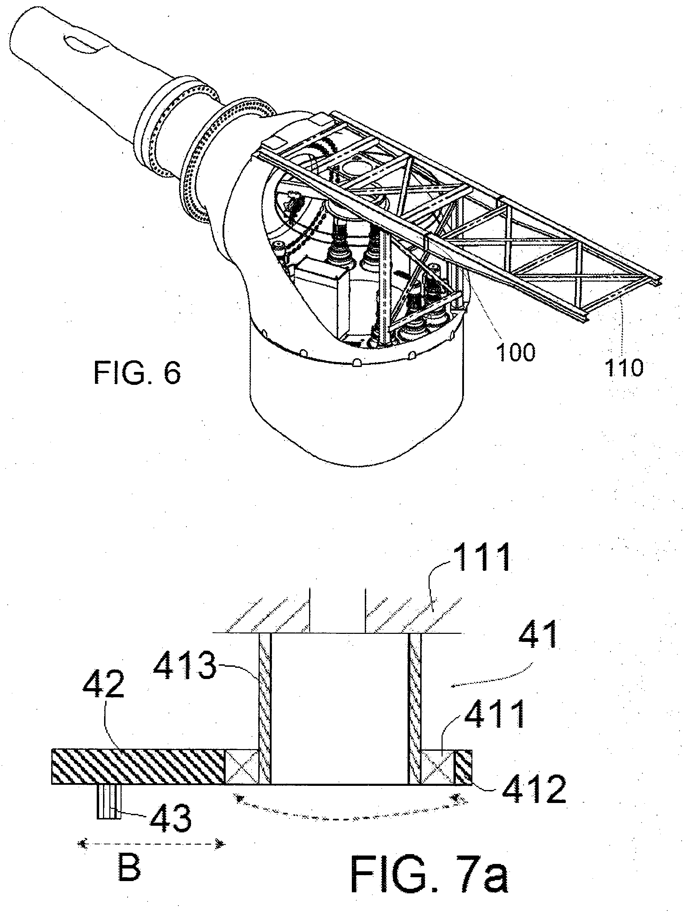

Figure 6 shows a perspective of the wind turbine nacelle according to an embodiment of the present invention wherein the overhead structure 100 comprises a rigid frame 110 (truss structure) that may support additional components such as a helipad. The structural strength and stiffness of the truss structure may be used to hang the base structure 41 of the slewing crane. It will be clear that where the base structure is attached at the roof, suitable reinforcements, mounting flanges etc. may be incorporated if necessary.

Figures 7a-7d schematically illustrate a cross-sectional view of embodiments attachment of the slewing crane at the nacelle roof. In all the embodiments shown, the base structure 41 comprises a bearing 411 about which the beam 42 can rotate. The crane further comprises a hoist 43 movably arranged on the beam 42, arrow B represents the possible movement of the hoist 43 on the beam 42.

In figure 7a, an inward extending cylinder 413 is mounted at the nacelle roof and forms a link member upon which the bearing 411 may be mounted. Additionally, figure 7a shows that the beam 42 at a proximal end may comprise an annular sleeve 412 surrounding the bearing 411, for mounting the beam 42 on the bearing 411.

In figures 7a, the beam 42 is attached to the bottom of the base structure 41 and extends radially in such a manner that it does not traverse the rotational axis of the crane. Thus, a hollow center is available through which e.g. the generator cables can be arranged towards the inside of the wind turbine tower.

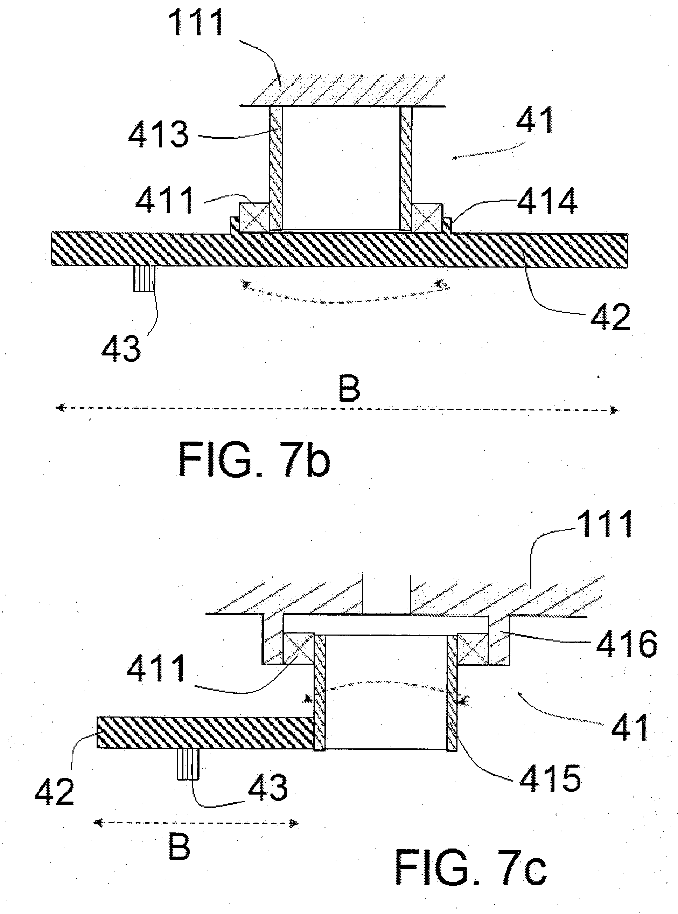

In the example of figure 7b, an annular sleeve may be formed by an annular protrusion 414 arranged on the upper side of the beam 42. The annular sleeve thus substantially surrounds the bearing 411. In figure 7b, the beam 42 is also attached to the bottom of the base structure 41 but traverses the rotational axis of the crane. Thus, the hoist 43 that is movably arranged on the beam 42 can reach the centre of the base structure 41. The hoist is thus able to pick up components located right underneath the rotational axis of the crane. In another similar embodiment, the crane beam 42 may be unsymmetrical with respect to the rotational axis. For example, the beam may extend from the annular protrusion on one side of the base structure, traverse the rotational axis and extend on the other side of the base structure.

In figure 7c, the beam of the crane also comprises an annular sleeve 415 which is arranged on the inside of the bearing 411. In this arrangement, the annular sleeve 415 is higher than in previous examples and has a secondary effect of creating a space between the beam 42 and the roof 411 of the nacelle. In the example of figure 7c, the bearing 411 is arranged between an inward protrusion 416 integrally formed with the nacelle roof and the annular sleeve 415. The inward protrusion 416 (with suitable bearing 411) in this case can be considered the base structure, attached at the roof, about which the crane beam can be rotated.

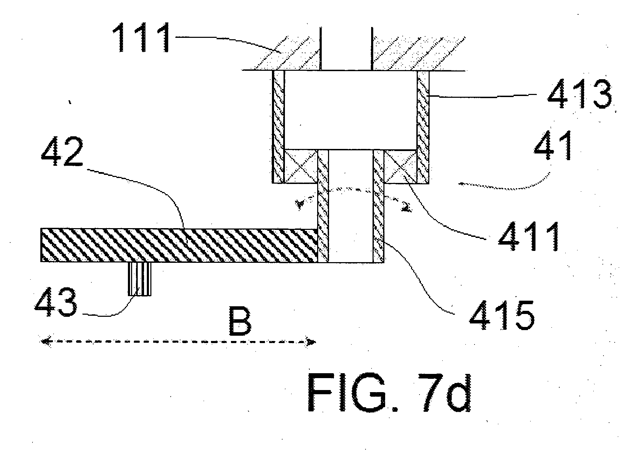

Figure 7d shows yet another example. The main difference with respect to figure 7c is that the bearing is arranged between annular sleeve 415 and cylinder 413 hung from the nacelle roof. In this case, contrary to the previous example, the cylinder 413 does not form part of the nacelle roof itself. The base structure, about which the crane beam can be rotated is formed by cylinder 413 (and bearing 411).

In the examples shown in figures 7a - 7d, the base structure was shown to comprise a bearing. It should be understood that any type of bearing may be suitable, e.g. a fluid bearing, a rolling element bearing or friction bearing. It will be clear that depending on the type of bearing chosen, the exact arrangement of the (annular sleeve) of the beam with respect to the bearing and base structure may vary. For example, instead of a substantially radial arrangement between beam and bearing as shown in figures 7a - 7d, a substantially horizontal arrangement may be provided.

It should be noted similarly that in all embodiments, instead of a bearing, suitable guide members may be incorporated in the base structure and the beam may comprise rolling elements such as wheels so that the beam can rotate about said guide members.

Although only a number of particular embodiments and examples of the invention have been disclosed herein, it will be understood by those skilled in the art that other alternative embodiments and/or uses of the invention and obvious modifications and equivalents thereof are possible. Furthermore, the present invention covers all possible combinations of the particular embodiments described. Thus, the scope of the present invention should not be limited by particular embodiments, but should be determined only by a fair reading of the claims that follow.

## Claims

1. Wind turbine nacelle comprising a slewing crane (40) arranged inside the nacelle,
wherein the crane (40) comprises a base structure (41) attached at a roof of the nacelle, a beam (42) rotatably mounted about said base structure (41), and a hoist (43) movably arranged on said beam (42).

2. Wind turbine nacelle according to claim 1; wherein the base structure (41) comprises a bearing (411) and the beam (42) is rotatably mounted about said bearing (411).

3. Wind turbine nacelle according to claim 1, wherein the base structure (41) comprises guide members and the beam (42) comprises rolling elements such that the beam (42) is rotatable about said guide members.

4. Wind turbine nacelle according to any of claims 1-3, wherein the beam (42) extends radially from the base structure (41) in such a manner that it does not traverse the rotational axis of the crane (50).

5. Wind turbine nacelle according to any of claims 1-3, wherein the beam (42) is coupled substantially at the bottom of the base structure (41) and traverses the rotational axis of the crane (50).

6. Wind turbine nacelle according to any of claims 1-5, wherein the beam comprises an annular sleeve for mounting the beam on the base structure.

7. Wind turbine nacelle according to any of claims 1-6, wherein the beam (42) is telescopic.

8. Wind turbine nacelle according to any of claims 1-7, wherein a forward extending beam (421) is mounted in a front portion of the nacelle in such a way that the beam (42) of the crane (40) can be aligned with said forward extending beam (421).

9. Wind turbine nacelle according to any of claims 1-8, wherein a rearward extending beam (422) is mounted in a rear portion of the nacelle in such a way that the beam (42) of the crane (40) can be aligned with said rearward extending beam (422).

10. Wind turbine nacelle according to any of claims 8 or 9, wherein said forward extending beam (421) and/or rearward extending beam (422) is fixedly mounted in the nacelle.

11. Wind turbine nacelle according to any of claims 8 or 9, wherein said forward extending beam (421) and/or rearward extending beam (422) is removably mounted in the nacelle.

12. Wind turbine nacelle according to any of above claims, further comprising an opening (15) at a rear portion of the nacelle.

13. Wind turbine nacelle according to any of above claims, wherein the roof of the nacelle comprises a rigid frame (110) supporting an helipad, and said bearing (411) is attached to said rigid frame (110).

14. Wind turbine comprising a hub carrying at least one of blade and a nacelle according to any of claims 1 - 13, the hub (10) being rotatably mounted on a frame (31') and the nacelle being rotatably mounted on a wind turbine tower (70).

15. Wind turbine according to claim 14, wherein the frame (31') extends forward into the hub, comprises a manhole (33) arranged in its upper side and is dimensioned such that an average-size adult human can move around through it at least up to the manhole (33).

16. Wind turbine according to any of claims 14 or 15, wherein a rotational axis of the base structure (41) of the slewing crane (40) substantially coincides with a wind turbine tower axis (50).

17. Wind turbine according to any of claims 14-16, wherein the nacelle comprises an opening (16) in the floor arranged on top of the wind turbine tower (70).

18. Wind turbine according to any claims 14-17, further comprising a transport system arranged in a lower portion of the frame (31') extending forward into the hub.

## Patentansprüche

1. Windturbinengondel umfassend einen Schwenkkran (40) innerhalb der Gondel angeordnet,
wobei der Kran (40) eine an einem Dach der Gondel befestigte Grundstruktur (41), einen um die Grundstruktur (41) herum drehbar montierten Balken (42), und ein auf dem Balken (42) beweglich angeordnetes Hebezeug (43) umfasst.

2. Windturbinengondel nach Anspruch 1, wobei die Grundstruktur (41) ein Lager (411) umfasst und der Balken (42) drehbar um das Lager (411) herum montiert ist.

3. Windturbinengondel nach Anspruch 1, wobei die Grundstruktur (41) Führungselemente umfasst und der Balken (42) Wälzkörper umfasst, so dass der Balken (42) um die Führungselemente herum drehbar ist.

4. Windturbinengondel nach einem der Ansprüche 1-3, wobei der Balken (42) sich radial von der Grundstruktur (41) heraus so erstreckt, dass er die Drehachse (50) des Krans nicht durchquert.

5. Windturbinengondel nach einem der Ansprüche 1-3, wobei der Balken (42) im Wesentlichen an den Boden der Grundstruktur (41) gekoppelt ist und die Drehachse (50) des Krans durchquert.

6. Windturbinengondel nach einem der Ansprüche 1-5, wobei der Balken eine ringförmige Hülse zum Montieren des Balkens auf der Grundstruktur umfasst.

7. Windturbinengondel nach einem der Ansprüche 1-6, wobei der Balken (42) teleskopisch ist.

8. Windturbinengondel nach einem der Ansprüche 1-7, wobei ein sich nach vorne erstreckender Balken in einem vorderen (421) Teil der Gondel so montiert ist, dass der Balken (42) des Krans (40) mit dem sich nach vorne erstreckenden Balken (421) ausgefluchtet werden kann.

9. Windturbinengondel nach einem der Ansprüche 1-8, wobei ein sich nach hinten erstreckender Balken in einem hinteren (422) Teil der Gondel so montiert ist, dass der Balken (42) des Krans (40) mit dem sich nach hinten erstreckenden Balken (422) ausgefluchtet werden kann.

10. Windturbinengondel nach einem der Ansprüche 8 oder 9, wobei der sich nach vorne (421) bzw. nach hinten (422) erstreckende Balken fest in der Gondel montiert ist.

11. Windturbinengondel nach einem der Ansprüche 8 oder 9, wobei der sich nach vorne (421) bzw. nach hinten (422) erstreckende Balken entfernbar in der Gondel montiert ist.

12. Windturbinengondel nach einem der obigen Ansprüche, weiterhin umfassend eine Öffnung (15) in einem hinteren Teil der Gondel.

13. Windturbinengondel nach einem der obigen Ansprüche, wobei das Dach der Gondel einen starren Rahmen (110) umfasst, der einen Hubschrauberlandeplatz stützt und das Lager (411) an dem starren Rahmen (110) befestigt ist.

14. Windturbine umfassend eine Nabe, die mindestens ein Blatt und eine Gondel nach einem der Ansprüche 1 - 13 trägt, wobei die Nabe (10) drehbar auf einem Rahmen (31') montiert ist und die Gondel drehbar auf einem Windturbinenturm (70) montiert ist.

15. Windturbine nach Anspruch 14, wobei der Rahmen (31') sich nach vorne in die Nabe hinein erstreckt, ein in dessen oberen Seite angeordnetes Mannloch (33) umfasst und so dimensioniert ist, dass ein erwachsener Mensch durchschnittlicher Größe sich dadurch mindestens bis zum Mannloch (33) frei bewegen kann.

16. Windturbine nach einem der Ansprüche 14 oder 15, wobei eine Drehachse der Grundstruktur (41) des Schwenkkrans (40) mit einer Achse (50) des Windturbinenturms zusammenfällt.

17. Windturbine nach einem der Ansprüche 14-16, wobei die Gondel eine Öffnung (16) im Boden umfasst, die über dem Windturbinenturm (70) angeordnet ist.

18. Windturbine nach einem der Ansprüche 14-17, weiterhin umfassend ein Transportsystem, das in einem unteren Teil des Rahmens (31') angeordnet ist, der sich nach vorne in die Nabe hinein erstreckt.

## Revendications

1. Nacelle d'éolienne comprenant une grue pivotante (40) disposé à l'intérieur de la nacelle,
dans laquelle la grue (40) comprend une structure de base (41) attachée à un plafond de la nacelle, une poutre (42) montée à rotation autour de ladite structure de base (41), et un appareil de levage (43) disposé de façon mobile sur ladite poutre (42).

2. Nacelle d'éolienne selon la revendication 1, dans laquelle la structure de base (41) comprend un palier (411) et la poutre (42) est montée à rotation autour dudit palier (411).

3. Nacelle d'éolienne selon la revendication 1, dans laquelle la structure de base (41) comprend des éléments de guidage et la poutre (42) comprend des éléments roulants de façon que la poutre (42) peut pivoter autour desdits éléments de guidage.

4. Nacelle d'éolienne selon l'une quelconque des revendications 1-3, dans laquelle la poutre (42) s'étend radialement par rapport à la structure de base (41) de façon qu'elle ne traverse pas l'axe de rotation (50) de la grue.

5. Nacelle d'éolienne selon l'une quelconque des revendications 1-3, dans laquelle la poutre (42) est couplée essentiellement au fond de la structure de base (41) et traverse l'axe de rotation (50) de la grue.

6. Nacelle d'éolienne selon l'une quelconque des revendications 1-5, dans laquelle la poutre comprend une manche annulaire pour monter la poutre sur la structure de base.

7. Nacelle d'éolienne selon l'une quelconque des revendications 1-6, dans laquelle la poutre (42) est téléscopique.

8. Nacelle d'éolienne selon l'une quelconque des revendications 1-7, dans laquelle une poutre s'étendant vers l'avant (421) est montée dans une partie avant de la nacelle de façon que la poutre (42) de la grue (40) peut être alignée avec ladite poutre s'étendant vers l'avant (421).

9. Nacelle d'éolienne selon l'une quelconque des revendications 1-8, dans laquelle une poutre s'étendant vers l'arrière (422) est montée dans une partie arrière de la nacelle de façon que la poutre (42) de la grue (40) peut être alignée avec ladite poutre s'étendant vers l'arrière (422).

10. Nacelle d'éolienne selon l'une quelconque des revendications 8 ou 9, dans laquelle ladite poutre s'étendant vers l'avant (421) et/ou poutre s'étendant vers l'arrière (422) est montée de manière fixe dans la nacelle.

11. Nacelle d'éolienne selon l'une quelconque des revendications 8 ou 9, dans laquelle ladite poutre s'étendant vers l'avant (421) et/ou poutre s'étendant vers l'arrière (422) est montée de manière amovible dans la nacelle.

12. Nacelle d'éolienne selon l'une quelconque des revendications ci-dessus, comprenant en outre une ouverture (15) dans une partie arrière de la nacelle.

13. Nacelle d'éolienne selon l'une quelconque des revendications ci-dessus, dans laquelle le plafond de la nacelle comprend un châssis rigide (110) portant une hélisurface, et ledit palier (411) est attaché audit châssis rigide (110).

14. Éolienne comprenant un moyeu portant au moins une pale et une nacelle selon l'une quelconque des revendications 1 - 13, étant le moyeu (10) monté à rotation sur un châssis (31') et étant la nacelle montée à rotation sur une tour d'éolienne (70).

15. Éolienne selon la revendication 14, dans laquelle le châssis (31') s'étend vers l'avant dans le moyeu, comprend un trou d'homme (33) disposé dans sa partie supérieure et est dimensionné de façon qu'un humain adulte de taille moyenne peut bouger à travers de celui-ci au moins jusqu'au trou d'homme (33).

16. Éolienne selon l'une quelconque des revendications 14 ou 15, dans laquelle l'axe de rotation de la structure de base (41) de la grue pivotante (40) coïncide essentiellement avec un axe (50) de la tour de l'éolienne.

17. Éolienne selon l'une quelconque des revendications 14-16, dans laquelle la nacelle comprend une ouverture (16) dans le sol disposée au-dessus de la tour d'éolienne (70).

18. Éolienne selon l'une quelconque des revendications 14-17, comprenant en outre un système de transport disposé dans une partie inférieure du châssis (31') s'étendant vers l'avant dans le moyeu.
